# FASCICULE DE BREVET EUROPEEN

(11) **EP 2 132 021 B1**
(45) Date de publication et mention de la délivrance du brevet: **18.03.2015**
(21) Numéro de dépôt: 08788105.8
(22) Date de dépôt: 02.04.2008
(51) Int. Cl.: B29C 49/42, B29C 49/52, B29C 49/58, B29C 49/06, B29K 67/00

(54) **DISPOSITIF ET PROCEDE DE SOUFFLAGE OU D'ETIRAGE SOUFFLAGE POUR LA FABRICATION DE RECIPIENTS METTANT EN OEUVRE DES MOYENS A PINCE PROPRES A SUPPORTER UNE EBAUCHE PAR SON COL**
VORRICHTUNG UND VERFAHREN ZUR HERSTELLUNG VON GEBLASENEN ODER STRECKGEBLASENEN BEHÄLTERN MITHILFE VON KLEMMMITTELN ZUR HALTUNG EINES ROHLINGS AM BUND
BLOWING OR STRETCH-BLOWING DEVICE AND METHOD OR MAKING VESSELS USING CLAMPING MEANS CAPABLE HOLDING A BLANK BY THE COLLAR THEREOF

(30) Priorité: 06.04.2007 FR 0702550
(43) Date de publication de la demande: 16.12.2009
(73) Titulaire: Sidel Participations, 76930 Octeville Sur Mer (FR)
(72) Inventeur: ROUSSEAU, Nicolas, F-76930 Octeville-Sur-Mer (FR); DANEL, Laurent, F-76930 Octeville-Sur-Mer (FR)
(74) Mandataire: Cabinet Plasseraud
(86) Numéro de dépôt international: PCT/FR2008/050580
(87) Numéro de publication internationale: WO 2008/139088

(56) Documents cités:
- FR-A- 2 720 679
- FR-A- 2 790 704
- US-A- 5 509 796
- US-A- 5 863 571

## Description

La présente invention porte sur un dispositif de soufflage ou d'étirage-soufflage pour la fabrication de récipients à partir d'ébauches en matière thermoplastique, notamment en PET, munies d'un col, ce dispositif comportant une tuyère de soufflage pour le soufflage d'un fluide sous pression à l'intérieur d'une ébauche ayant un corps disposé dans une cavité de moulage d'un moule et ayant un col émergeant hors d'une surface du moule, avec une collerette du col reposant sur ladite surface du moule, la tuyère de soufflage étant mobile entre deux positions limites, à savoir une position haute relevée au-dessus du moule et une position basse de soufflage dans laquelle la tuyère de soufflage est fonctionnellement en communication étanche avec le col de manière que de l'air de soufflage sous pression soit apte à être injecté dans l'ébauche.

La présente invention porte également sur un procédé de soufflage ou d'étirage-soufflage pour la fabrication de récipients à partir d'ébauches en matière thermoplastique, notamment en PET, munies d'un col à l'aide d'un dispositif de soufflage ou d'étirage-soufflage comportant une tuyère de soufflage pour le soufflage d'un fluide sous pression à l'intérieur d'une ébauche ayant un corps disposé dans une cavité de moulage d'un moule et ayant un col émergeant hors d'une surface dudit moule, une collerette dudit col reposant sur ladite surface du moule, la tuyère de soufflage étant mobile entre deux positions limites, à savoir une position haute relevée au-dessus du moule et une position basse de soufflage dans laquelle la tuyère de soufflage est fonctionnellement en communication étanche avec le col de manière que de l'air de soufflage sous pression soit apte à être injecté dans l'ébauche.

Un dispositif de soufflage du genre précité est notamment décrit dans le document FR 2 790 704, qui représente le préambule de la revendication 1.

De manière courante, les ébauches ou préformes sont préalablement chauffées dans un four de conditionnement thermique avant d'être transférées dans un moule d'un dispositif de soufflage à l'aide d'une roue de transfert présentant une pluralité de bras de préhension sur son pourtour. Afin de placer le corps de l'ébauche ou préforme dans les moules, la commande d'ouverture des bras de préhension de la roue de transfert est synchronisée avec la commande d'ouverture et de fermeture des moules, le corps de l'ébauche chauffée étant insérée dans le moule ouvert et est libéré une fois le moule fermé, l'ébauche ou préforme se trouvant alors en appui par une collerette annulaire en saillie radiale, prévue dans la partie de col de la préforme, contre la surface supérieure du moule.

Toutefois, afin de diminuer les coûts de production des récipients soufflés, il est courant de réduire la masse des préformes.

Ainsi, du fait que l'ébauche chauffée ne repose uniquement sur la surface supérieure du moule qu'à l'aide de sa collerette, il arrive que les forces de gravité ne suffisent pas à plaquer de manière suffisante la collerette contre la surface supérieure du moule, ce qui résulte en des préformes non placées de manière sensiblement coaxiale à l'axe principal de la tuyère de soufflage.

Il en résulte des récipients soufflés non conformes avec des collerettes ne se trouvant pas dans un plan transversal à l'axe de la tuyère de soufflage, c'est-à-dire résultant en des collerettes inclinées. Ces récipients doivent ensuite être mis au rebut pour destruction.

Afin de diminuer les pertes engendrées par ces récipients mal formées, il serait particulièrement intéressant de réaliser un dispositif de soufflage permettant de garantir le placement de la préforme ou ébauche de manière sensiblement coaxiale à l'axe de soufflage de la tuyère de soufflage.

Selon un premier de ses aspects, la présente invention porte sur un dispositif de soufflage ou d'étirage-soufflage pour la fabrication de récipients à partir d'ébauches en matière thermoplastique, notamment en PET, munies d'un col, ce dispositif comportant une tuyère de soufflage pour le soufflage d'un fluide sous pression à l'intérieur d'une ébauche ayant un corps disposé dans une cavité de moulage d'un moule et ayant un col émergeant hors d'une surface dudit moule, avec une collerette dudit col reposant sur ladite surface du moule, la tuyère de soufflage étant mobile entre deux positions limites, à savoir une position haute relevée au-dessus du moule et une position basse de soufflage dans laquelle la tuyère de soufflage est fonctionnellement en communication étanche avec le col de manière que de l'air de soufflage sous pression soit apte à être injecté dans l'ébauche,
le dispositif étant caractérisé en ce que :
- des moyens à pince sont disposés au-dessus du moule dans le dispositif de soufflage ou d'étirage-soufflage et sont propres à supporter une ébauche par son col sensiblement coaxialement à la cavité de moulage du moule ;
- des moyens de support desdits moyens à pince sont propres à autoriser un mouvement desdits moyens à pince sensiblement parallèlement à l'axe de soufflage de la tuyère de soufflage entre une position relevée et une position abaissée dans laquelle le corps de l'ébauche est engagé dans la cavité du moule ;
- au moins une branche des moyens à pince est mobile transversalement à l'axe de soufflage de la tuyère de soufflage ; et
- des moyens de couplage mécanique sont interposés entre lesdits moyens à pince et la tuyère de soufflage et sont propres à synchroniser les mouvements des moyens à pince avec le déplacement de la tuyère de soufflage.

Le dispositif de soufflage ainsi obtenu permet de garantir un meilleur placement de l'ébauche non soufflée dans la cavité de soufflage de manière sensiblement coaxiale à l'axe de soufflage.

Selon une forme de réalisation avantageuse, au moins une branche des moyens à pince comprend un bras de préhension ainsi qu'un porte-bras apte à coulisser sur un rail de guidage transversal par l'intermédiaire d'un chariot coulissant.

Afin de faciliter le travail de maintenance sur les moyens à pince, notamment lors de la modification des dimensions des ébauches, le bras de préhension est fixé de manière amovible sur le porte-bras.

Afin de permettre le couplage mécanique et fonctionnel de la tuyère de soufflage avec les moyens à pince, au moins une branche des moyens à pince présente au moins un chemin de came propre à coopérer avec au moins un galet suiveur de came fixé sur la tuyère de soufflage.

Selon une forme de réalisation avantageuse, le chemin de came de la branche est formé par un rebord interne de la branche en vis-à-vis de l'autre des deux branches.

Afin de permettre le rapprochement et l'écartement des deux branches l'une de l'autre, les moyens à pince présentent deux branches traversées l'une et l'autre par une tige, dont au moins une extrémité est terminée par une butée fixe, du type rondelle, et en ce que des moyens ressort sont prévus enroulés sur la tige prenant appui d'une part sur la butée de la tige, et d'autre part sur une zone d'appui de la branche, la tige traversant un orifice formé dans la zone d'appui, ce grâce à quoi la variation de contraction des moyens de ressort détermine l'écartement entre les deux branches, permettant ainsi la saisie ou non d'une ébauche par son col.

Afin de permettre le déplacement axial des moyens à pince, le rail de guidage transversal est fixé sur des moyens de support, du type barre support, prévus coulissants sur un rail de guidage coaxial à l'axe de soufflage de la tuyère de soufflage par l'intermédiaire d'un chariot coulissant.

Afin de paramétrer le déplacement de la tuyère de soufflage, la tuyère de soufflage est solidarisée à un moyen de commande du déplacement de la tuyère comprenant un galet propre à coopérer avec une came fixe.

Afin de limiter le coulissement axial des moyens à pince et de permettre l'ouverture et la fermeture des moyens à pince, il est prévu des moyens de butée contre lesquels viennent buter les moyens à pince de manière à borner le coulissement des moyens à pince sur le rail de guidage coaxial à l'axe de soufflage de la tuyère de soufflage.

Avantageusement, les moyens de support des moyens à pince sont aptes à venir buter contre les moyens de butée.

Selon une forme de réalisation avantageuse des moyens de couplage, une plaque transversale est fixée sur la tuyère de soufflage, préférentiellement sur l'extrémité de soufflage de la tuyère, plaque sur laquelle est solidarisé ledit au moins un galet apte à suivre le chemin de came de la branche des moyens à pince ainsi que le moyen de commande du déplacement de la tuyère de soufflage.

Dans une variante de réalisation intéressante permettant notamment de s'affranchir de la fatigue des moyens de ressort, des moyens aimantés sont prévus sur les faces en vis-à-vis des branches respectivement, ce grâce à quoi les moyens à pince sont verrouillés magnétiquement en position de fermeture.

Selon un second de ses aspects, la présente invention porte sur un procédé de soufflage ou d'étirage-soufflage pour la fabrication de récipients à partir d'ébauches en matière thermoplastique, notamment en PET, munies d'un col à l'aide d'un dispositif de soufflage ou d'étirage-soufflage comportant une tuyère de soufflage pour le soufflage d'un fluide sous pression à l'intérieur d'une ébauche ayant un corps disposé dans une cavité de moulage d'un moule et ayant un col émergeant hors d'une surface dudit moule, une collerette dudit col reposant sur ladite surface du moule, la tuyère de soufflage étant mobile entre deux positions limites, à savoir une position haute relevée au-dessus du moule et une position basse de soufflage dans laquelle la tuyère de soufflage est fonctionnellement en communication étanche avec le col de manière que de l'air de soufflage sous pression soit apte à être injecté dans l'ébauche.

On connait du document US 5 509 796 un tel procédé selon le préambule de la revendication 13, qui comporte entre autres les étapes suivantes :
- une étape de saisie du col d'une ébauche non soufflée par des moyens à pince prévus au dessus du moule dans le dispositif de soufflage ou d'étirage soufflage,
- une étape de placement, par lesdits moyens à pince, du corps de l'ébauche dans la cavité de moulage,
- une étape de soufflage de l'ébauche à l'aide de la tuyère parvenue dans sa position basse,
- une étape de déplacement de l'ébauche soufflée par lesdits moyens à pince hors de la cavité de moulage,
- et une étape de transfert de l'ébauche soufflée depuis les moyens à pince vers les moyens extérieurs de préhension d'ébauches soufflées.

L'invention porpose un procédé tel que défini par la revendication 13.

Afin de permettre notamment la saisie des ébauches non soufflées, le procédé selon l'invention comprend au moins une étape de commande de l'ouverture ou de la fermeture des moyens à pince.

Selon une forme de réalisation avantageuse, le procédé selon l'invention comprend une étape de fermeture des moyens à pince en vue de la saisie de l'ébauche chauffée non soufflée et une étape d'ouverture des moyens à pince après le soufflage de l'ébauche en vue de son transfert vers des moyens extérieurs de préhension d'ébauches soufflées.

Afin de permettre le synchronisme de commande entre les moyens à pince et la tuyère de soufflage, le procédé selon l'invention comprend une étape de remontée de la tuyère jusqu'à sa position haute relevée au-dessus du moule de manière à permettre l'ouverture des moyens à pince pour le transfert de l'ébauche soufflée et une étape de descente partielle de la tuyère de soufflage depuis sa position haute relevée au-dessus du moule de manière à permettre la fermeture des moyens à pince pour saisir une ébauche chauffée non soufflée, les moyens à pince restant en butée contre des moyens de butée prévus dans le dispositif de soufflage ou d'étirage-soufflage.

De manière avantageuse, afin de permettre le soufflage de l'ébauche par une tuyère du type à cloche, le procédé selon l'invention comprend une étape d'ouverture des moyens à pince une fois le corps de l'ébauche chauffée non soufflée placée dans la cavité de moulage et une étape de fermeture des moyens à pince une fois l'ébauche soufflée, le corps de l'ébauche soufflée restant dans la cavité de moulage.

Afin de permettre le coulissement axial des moyens à pince, le procédé selon l'invention comprend une étape de descente partielle de la tuyère de soufflage en direction de sa position basse de soufflage avant ladite étape de placement de l'ébauche dans la cavité de moulage.

Selon une forme de réalisation de l'invention, le procédé selon l'invention comprend de manière supplémentaire une étape de descente totale de la tuyère de soufflage jusqu'à sa position basse de soufflage avant l'étape de soufflage de l'ébauche de manière à permettre l'ouverture des moyens à pince et le placement de l'ébauche par sa collerette sur le moule et une étape de remontée partielle de la tuyère de soufflage depuis la position basse de soufflage en direction de la position haute escamotée avant ladite étape de saisie de l'ébauche soufflée par les moyens à pince de manière à permettre la fermeture des moyens à pince pour la préhension de l'ébauche soufflée, les moyens à pince restant en butée contre des moyens de butée prévus dans le dispositif de soufflage.

La présente invention va maintenant être décrite à l'aide d'un exemple uniquement illustratif et nullement limitatif de la portée de la présente invention, et à partir des illustrations ci-jointes dans lesquelles :
- la figure 1 est une vue en perspective du dispositif de soufflage selon l'invention, la tuyère de soufflage étant dans sa position basse de soufflage ;
- la figure 2 est une vue en perspective arrière des moyens à pince de l'ébauche selon l'invention, les moyens à pince étant dans leur position permettant le soufflage de l'ébauche ;
- la figure 3 est une vue en perspective arrière du moyen de commande du déplacement de la tuyère de soufflage selon l'invention ;
- la figure 4 est une vue en perspective frontale des moyens à pince de l'ébauche, la tuyère de soufflage étant dans sa position haute relevée avec les moyens à pince ouverts en position de transfert/réception d'une ébauche ;
- la figure 5 est une vue en perspective frontale des moyens à pince de l'ébauche, la tuyère de soufflage étant descendue partiellement de sa position haute en direction de la position basse en entraînant la fermeture des moyens à pince, préférentiellement au niveau de la gorge d'inviolabilité de l'ébauche, et le maintien de l'ébauche non soufflée;
- la figure 6 est une vue en perspective frontale des moyens à pince de l'ébauche, la tuyère de soufflage étant descendue en direction de sa position de soufflage et toujours dans leur position de maintien de l'ébauche ;
- la figure 7 est une vue en perspective frontale des moyens à pince dans leur position permettant le soufflage de l'ébauche ; et
- la figure 8 est une vue en perspective analogue à celle de la figure 2 montrant une variante de réalisation intéressante des moyens à pince.

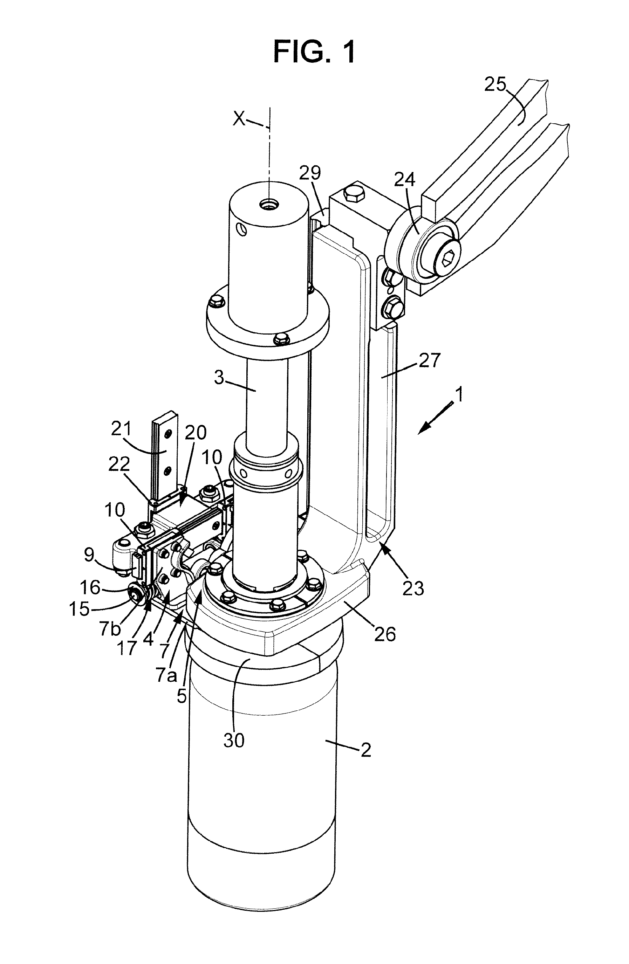

Sur la vue en perspective sur la figure 1, est représenté schématiquement et partiellement un dispositif 1 de soufflage ou d'étirage-soufflage pour la fabrication de récipients 2 à partir d'ébauches en matière thermoplastique, notamment en PET (par exemple une préforme), munies d'un col, ce dispositif 1 comportant une tuyère 3 de soufflage pour le soufflage d'un fluide sous pression à l'intérieur d'une ébauche ayant un corps disposé dans une cavité de moulage d'un moule et avec son col émergeant hors du moule.

La tuyère 3 de soufflage est mobile entre deux positions limites, à savoir une position haute relevée au-dessus du moule et une position basse de soufflage dans laquelle la tuyère 3 de soufflage est fonctionnellement en communication étanche avec le col de manière que de l'air de soufflage sous pression soit apte à être injecté dans l'ébauche.

Le dispositif 1 de soufflage comprend des moyens 4 à pince propres à supporter une ébauche par son col, ainsi que des moyens 5 de couplage mécanique interposés entre lesdits moyens 4 à pince et la tuyère 3 de soufflage et propres à synchroniser les mouvements des moyens 4 à pince avec le déplacement de la tuyère 3 de soufflage, ainsi que la commande de l'ouverture et de la fermeture des moyens 4 à pince avec la commande du soufflage et du déplacement de la tuyère 3 de soufflage.

Les moyens 4 à pince comprennent deux branches 7, 8 dont au moins une est mobile de manière transversale à l'axe de soufflage (X) de la tuyère 3 de soufflage.

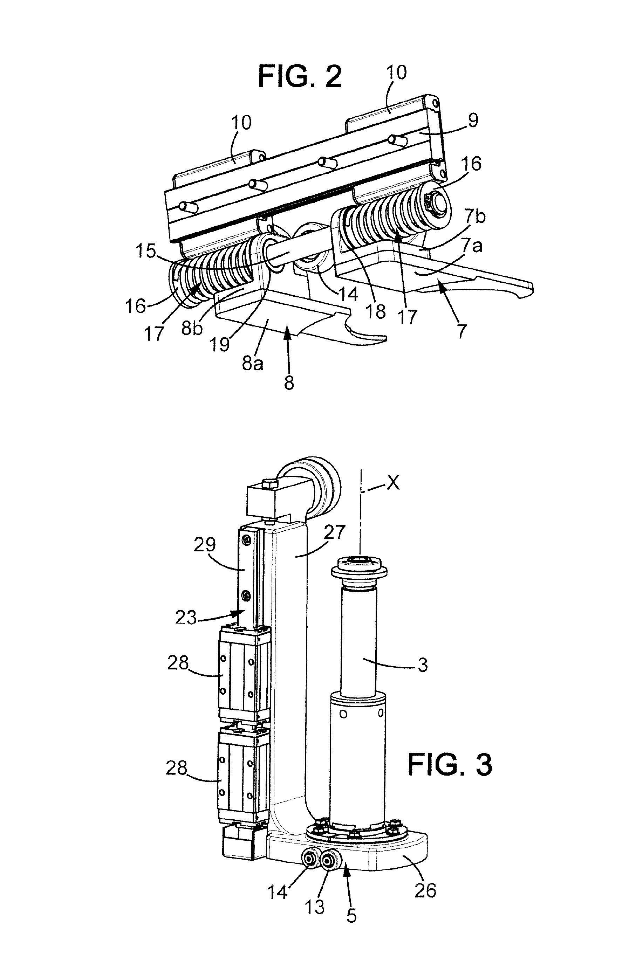

Comme représenté plus précisément sur la figure 2 selon une vue en perspective arrière des moyens 4 à pince, au moins une des branches 7, 8 des moyens 4 à pince comprend un bras 7a, 8a de préhension ainsi qu'un porte-bras 7b, 8b apte à coulisser sur un rail 9 de guidage transversal à l'axe de soufflage (X) par l'intermédiaire d'un chariot 10 coulissant.

Dans le cas où les deux branches 7, 8 sont prévues mobiles transversalement, alors chaque porte-bras 7b, 8b est fixé sur un chariot 10 coulissant transversalement sur le rail 9 de guidage. Alternativement, il est également possible de prévoir deux rails de guidage à la place du rail 9 de guidage, un rail 9 de guidage étant alors respectivement associé à un chariot 10 coulissant d'une des deux branches 7, 8 des moyens 4 à pince.

Le bras 7a, 8a de préhension est préférentiellement fixé de manière amovible sur le porte-bras 7b, 8b respectif à l'aide de tout moyen de fixation connu en soi, par exemple des moyens de vissage.

Au moins une branche 7, 8 des moyens 4 à pince présente au moins un chemin 11, 12 de came propre à coopérer avec les moyens 5 de couplage mécanique sous la forme d'au moins un galet 13, 14 suiveur de came fixé sur la tuyère 3 de soufflage et tel que représenté sur la figure 3 sur une vue partielle en perspective arrière de la tuyère 3 de soufflage.

Il est bien entendu que selon le mode de réalisation préférentielle de l'invention, il est prévu de réaliser les deux branches transversalement mobiles et toutes deux commandées en translation transversale à l'aide respectivement de deux galets 13, 14 suiveur de came, mais qu'il est également possible de prévoir uniquement une seule des deux branches 7, 8 transversalement mobile et commandée en translation transversale à l'aide uniquement d'un galet 13, 14 suiveur de came apte à coopérer avec un chemin 11, 12 de came formé dans la branche 7, 8, et préférentiellement formé dans le porte-bras 7b, 8b de la branche 7, 8.

Selon une forme de réalisation préférentielle de l'invention, le chemin 11, 12 de came de ladite branche 7, 8 est formé par un rebord interne de ladite branche 7, 8 en vis-à-vis de l'autre des deux branches 7, 8.

Ainsi, préférentiellement, les branches 7, 8 présentent deux rebords en vis-à-vis contre lesquels sont propres à coopérer et à circuler les galets 13, 14 prévus fixes sur la tuyère 3 de soufflage.

Il est dans les compétences de l'homme du métier d'adapter la forme, notamment les courbures, de chaque chemin 11, 12 de came afin de commander le déplacement transversal de chaque branche 7, 8 sur le rail 9 de guidage.

De manière alternative, à la place des galets 13, 14 suiveurs de came fixés sur la tuyère 3 de soufflage propres à coopérer avec des chemins 11, 12 de came prévus respectivement dans chaque branche 7, 8 des moyens 4 à pince, il est également possible de prévoir au moins un galet suiveur de came, et préférentiellement deux galets suiveurs de came, fixés respectivement sur chaque branche 7, 8 des moyens 4 à pince et propres à coopérer avec au moins un chemin de came prévu formé dans la tuyère 3 de soufflage, par exemple au niveau de l'extrémité de soufflage de la tuyère 3 de soufflage. Pour ce faire, il peut être fixé sur la tuyère 3 de soufflage une plaque dont les rebords latéraux forment les chemins de came des deux galets fixés sur les deux branches 7, 8.

Comme cela est représenté plus précisément sur la figure 2, afin de commander l'écartement entre les deux branches 7, 8, les moyens 4 à pince présentent deux branches 7, 8 traversées l'une et l'autre par une tige 15, dont au moins une extrémité, et préférentiellement les deux extrémités, est terminée par une butée 16 fixe, du type rondelle.

Des moyens 17 ressort sont prévus enroulés sur la tige 15 prenant appui d'une part sur la butée 16 de la tige 15, et d'autre part sur une zone 18 d'appui de la branche 7, 8, la tige 15 traversant un orifice 19 formé dans la zone 18 d'appui, ce grâce à quoi la variation de contraction des moyens 17 de ressort détermine l'écartement entre les deux branches 7, 8, permettant ainsi la saisie ou non d'une ébauche par son col. Il sera vu ultérieurement un mode de fonctionnement préférentiel des moyens 4 à pince.

Le rail 9 de guidage transversal est fixé sur des moyens 20 de support, du type barre support, prévus coulissants sur un rail 21 de guidage coaxial à l'axe de soufflage X de la tuyère 3 de soufflage par l'intermédiaire d'un chariot 22 coulissant, le rail 21 de guidage étant en général prévu fixe sur une console dans laquelle est prévu l'ensemble des pièces constitutives (moule, tuyère 3 de soufflage et moyens 4 à pince) du dispositif 1 de soufflage.

La tuyère 3 de soufflage est solidarisée à un moyen 23 de commande du déplacement de la tuyère 3 comprenant un galet 24 propre à coopérer avec une came 25 fixe (voir figure 1).

Plus précisément, une plaque 26 transversale est fixée sur la tuyère 3 de soufflage, préférentiellement à l'extrémité de la tuyère 3 de soufflage, plaque 26 sur laquelle sont fixées et solidarisées les galets 13, 14 aptes à suivre les chemins 11, 12 de came des branches 7, 8 des moyens 4 à pince ainsi que le moyen 23 de commande du déplacement de la tuyère 3 de soufflage.

Comme représenté sur la figure 3 selon une vue partielle en perspective arrière, le moyen 23 de commande se présente sous la forme d'une colonne 27 prenant appui sur la plaque 26 transversale et apte à coulisser axialement dans des chariots 28 de guidage par l'intermédiaire d'un rail 29 fixé sur la colonne 27.

Le dispositif de soufflage comprend des moyens de butée (non représentés sur les figures) contre lesquels viennent buter les moyens 4 à pince de manière à borner le coulissement des moyens 4 à pince sur le rail de guidage coaxial à l'axe (X) de soufflage de la tuyère 3 de soufflage, et plus précisément les moyens 20 de support des moyens 4 à pince sont aptes à venir buter contre les moyens de butée.

Plus précisément, les moyens de butée sont de type connu en soi et prévus au dessus et en dessous des moyens 20 de support des moyens 4 à pince de sorte à définir une limite haute et une limite basse lors du coulissement du chariot 22 sur le rail 21 de guidage axial, quant à lui prévu sur une console fixe du dispositif de soufflage.

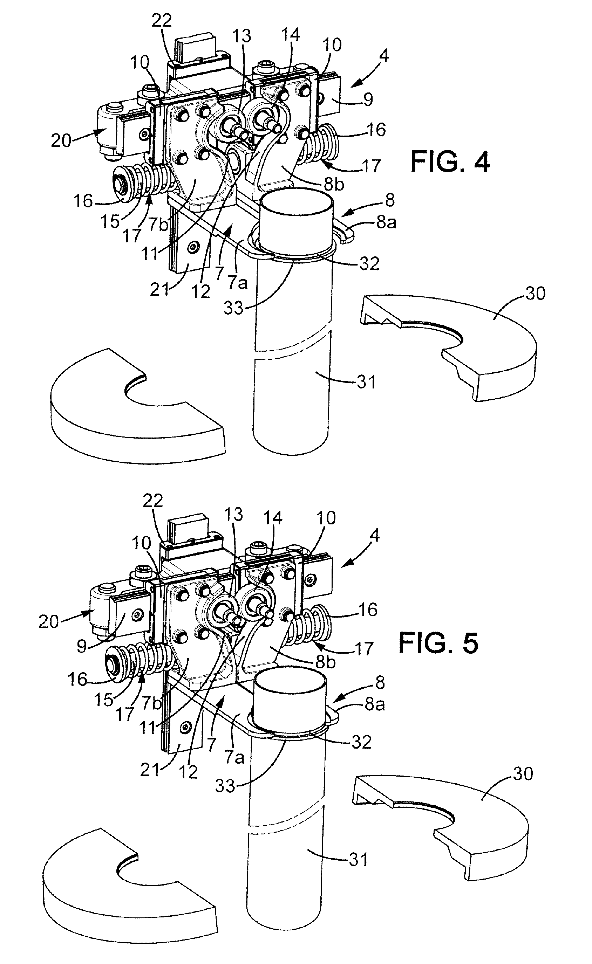

Les figures 4 à 7 représentent respectivement quatre étapes lors du déplacement et de l'ouverture/fermeture des moyens 4 à pince, à savoir les étapes de saisie d'une ébauche non soufflée jusqu'à son soufflage, les étapes étant identiques, mais selon un ordre inversé, pour la saisie de l'ébauche soufflée et son transfert vers des moyens de préhension extérieurs.

En effet, selon un second de ses aspects, la présente invention porte sur un procédé de soufflage ou d'étirage-soufflage pour la fabrication de récipients à partir d'ébauches en matière thermoplastique, notamment en PET, munies d'un col à l'aide d'un dispositif 1 de soufflage ou d'étirage-soufflage comportant une tuyère 3 de soufflage pour le soufflage d'un fluide sous pression à l'intérieur d'une ébauche ayant un corps disposé dans une cavité de moulage d'un moule et avec son col émergeant hors du moule, la tuyère 3 de soufflage étant mobile entre deux positions limites, à savoir une position haute relevée au-dessus du moule et une position basse de soufflage dans laquelle la tuyère 3 de soufflage est fonctionnellement en communication étanche avec le col de manière que de l'air de soufflage sous pression soit apte à être injecté dans l'ébauche.

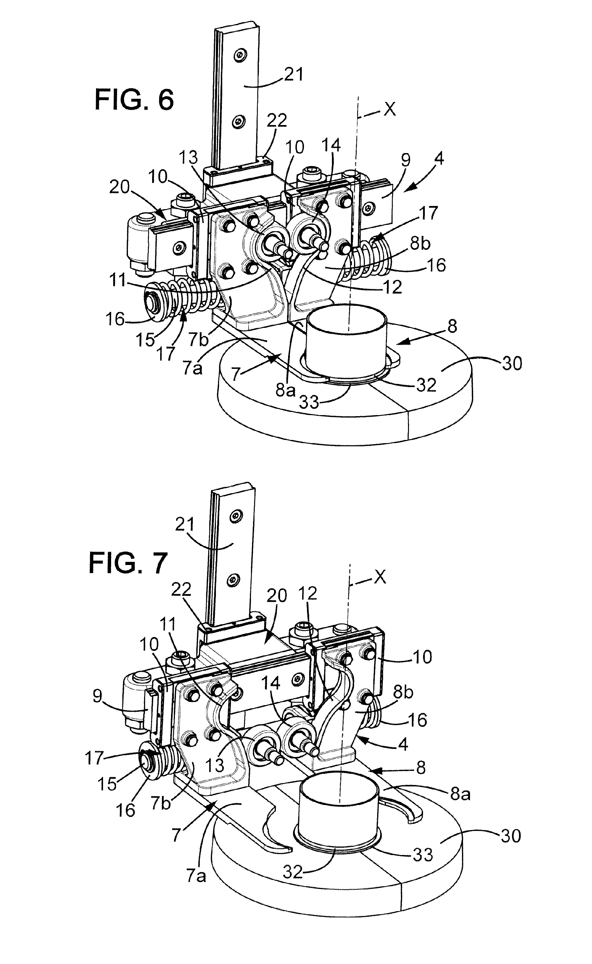

De manière générale, le procédé comprend au moins les étapes suivantes :
- une étape de saisie du col d'une ébauche non soufflée par les moyens 4 à pince prévus dans le dispositif de soufflage ou d'étirage-soufflage, cette étape étant illustrée sur les figures 4 et 5 ; de manière préférentielle, les moyens 4 à pince saisissent l'ébauche 31 non soufflée par son col avec chacun des bras 7a, 8a présentant une extrémité apte à se loger dans la gorge 32 d'inviolabilité de l'ébauche 31, la gorge 32 d'inviolabilité étant située juste au-dessus de la collerette 33 de l'ébauche 31 ;
- une étape de placement par lesdits moyens 4 à pince du corps de l'ébauche dans la cavité de moulage, cette étape étant illustrée sur les figures 6 et 7, la collerette 33 de l'ébauche 31 se trouvant alors en appui contre la surface 30 supérieure du moule ;
- une étape de soufflage de l'ébauche ;
- une étape de déplacement de l'ébauche soufflée par les moyens 4 à pince hors de la cavité de moulage ;
- une étape de transfert de l'ébauche soufflée depuis les moyens 4 à pince vers des moyens extérieurs de préhension d'ébauches soufflées.

L'étape de saisie de l'ébauche non soufflée et l'étape de transfert de l'ébauche soufflée sont préférentiellement réalisées grâce à une étape de commande de l'ouverture ou de la fermeture des moyens 4 à pince.

Plus précisément, le procédé selon l'invention comprend une étape de fermeture des moyens 4 à pince en vue de la saisie de l'ébauche chauffée non soufflée (alimentée par des moyens de préhensions extérieurs d'ébauches non soufflées) et une étape d'ouverture des moyens 4 à pince après le soufflage de l'ébauche en vue de son transfert vers des moyens extérieurs de préhension d'ébauches soufflées.

De même, le procédé selon l'invention comprend de manière optionnelle une étape d'ouverture des moyens 4 à pince une fois le corps de l'ébauche chauffée non soufflée placée dans la cavité de moulage et une étape de fermeture des moyens 4 à pince une fois l'ébauche soufflée, le corps de l'ébauche soufflée restant dans la cavité de moulage.

De manière plus détaillée, le procédé selon l'invention comprend une étape de remontée de la tuyère jusqu'à sa position haute relevée au-dessus du moule de manière à permettre l'ouverture des moyens 4 à pince pour le transfert de l'ébauche soufflée et une étape de descente partielle de la tuyère de soufflage depuis sa position haute relevée au-dessus du moule de manière à permettre la fermeture des moyens 4 à pince pour saisir une ébauche chauffée non soufflée, les moyens 4 à pince restant en butée contre les moyens de butée en position haute prévus dans le dispositif de soufflage ou d'étirage-soufflage.

Il est ensuite prévu une étape de descente partielle de la tuyère 3 de soufflage en direction de sa position basse de soufflage avant l'étape de placement de l'ébauche, non soufflée, dans la cavité de moulage.

Finalement, il est alors prévu une étape de descente totale de la tuyère 3 de soufflage jusqu'à sa position basse de soufflage avant l'étape de soufflage de l'ébauche de manière à permettre l'ouverture des moyens 4 à pince et le placement de l'ébauche par sa collerette sur le moule et une étape de remontée partielle de la tuyère de soufflage depuis la position basse de soufflage en direction de la position haute escamotée avant l'étape de saisie de l'ébauche soufflée par les moyens 4 à pince de manière à permettre la fermeture des moyens 4 à pince pour la préhension de l'ébauche soufflée, les moyens 4 à pince restant en butée contre des moyens de butée prévus dans le dispositif 1 de soufflage en position basse.

Autrement dit, le procédé selon l'invention comprend tout d'abord la saisie d'une ébauche non soufflée par les moyens 4 à pince. Pour ce faire, les deux branches 7, 8 des moyens 4 à pince sont écartées l'une de l'autre d'une distance telle qu'il est possible d'insérer dans l'espace entre les deux branches 7, 8 le col d'une ébauche non soufflée. Cette position de saisie de l'ébauche 31 non soufflée est représentée à la figure 4. En effet, les chemins 11, 12 de came sont conformés de manière telle que, quand la tuyère 3 de soufflage est en position haute, les deux galets 13, 14 solidarisés à la tuyère 3 écartent légèrement les deux branches 7, 8 en exerçant une légère contraction des moyens 17 ressort entraînant une diminution de la distance entre les butée 16 de la tige 15 et la zone d'appui 18 des branches 7, 8. Dans cette position, les moyens 4 à pince sont en butée contre des moyens de butée de tout type permettant d'empêcher le coulissement axial des moyens 4 à pince sur le rail 21 de guidage axial.

Afin de saisir l'ébauche non soufflée, il est ensuite procédé à une descente partielle de la tuyère 3 de soufflage depuis sa position haute (telle que représentée sur la figure 4) vers sa position basse, les chemins 11, 12 de came étant conformés de manière telle que cette descente partielle entraîne un rapprochement des deux branches 7, 8 l'une de l'autre et une saisie par pincement du col de l'ébauche 31 au niveau de sa gorge 32 d'inviolabilité. Les deux galets 13, 14 solidarisés sur la tuyère 3 de soufflage se trouvent alors dans la position telle que représentée sur la figure 5. Les moyens 4 à pince ne se trouvent alors plus en butée contre les moyens de butée prévus en position haute et ont donc légèrement coulissé axialement sur le rail 21 de guidage axial.

La tuyère 3 de soufflage est alors descendue axialement vers sa position basse et telle que représentée sur la figure 6. Il est à noter que les chemins 11, 12 de came prévus dans les deux branches 7, 8 des moyens 4 à pince sont conformés de manière telle que la descente des moyens 4 à pince jusque à ce qu'ils atteignent les moyens de butée en position basse n'entraînent pas l'écartement des deux branches 7, 8, les moyens 17 ressort présentant une force de tension telle que le mouvement de descente de la tuyère 3 de soufflage entraîne le coulissement axial descendant des moyens 4 à pince sans provoquer un déplacement des galets 13, 14 sur les chemins 11, 12 de came.

Dans leur position basse, les moyens 4 à pince sont en butée contre des moyens de butée et les branches 7, 8 sont juste au-dessus de la surface 30 supérieure du moule. Toutefois, la tuyère 3 de soufflage 3 n'a pas encore atteint sa position basse de soufflage, même si les moyens 4 à pince ont atteint leur position basse.

Afin de permettre l'ouverture des moyens 4 à pince et que la collerette 33 de l'ébauche soit posée délicatement contre la surface 30 supérieure du moule, il est ensuite procédé à une descente de la tuyère 3 de soufflage, ce qui entraîne un déplacement des galets 13, 14 sur les chemins 11, 12 de came et une contraction des moyens 17 ressort provoquant l'ouverture et l'écartement des deux branches 7, 8 (voir figure 7), les moyens 4 à pince étant en butée ne pouvant plus coulisser sur le rail 21 de guidage axial.

Une fois l'ébauche soufflée, il est procédé à la remontée de la tuyère 3 de soufflage ce qui provoque à la fois un rapprochement et la saisie de l'ébauche soufflée par les branches 7, 8 des moyens 4 à pince au niveau de la gorge 32 d'inviolabilité de l'ébauche soufflée, les galets 13, 14 se retrouvant dans leur position dite intermédiaire avec les moyens 17 ressort dans leur position non contractée (voir figure 6).

Il est ensuite procédé à la remontée de la tuyère 3 de soufflage jusqu'à ce que les moyens 4 à pince viennent en butée contre des moyens de butée haute, les galets 13, 14 restant en position dans les chemins 11, 12 de came des deux branches 7, 8. Les moyens 4 à pince se retrouvent donc de nouveau dans leur position telle que représentée sur la figure 5.

Une fois les moyens 4 à pince en butée contre les moyens de butée haute, il est ensuite procédé à une remontée partielle de la tuyère 3 de soufflage jusqu'à ce que celle-ci soit dans sa position haute ce qui entraîne un déplacement des galets 13, 14 jusqu'à ce qu'ils soient dans leur position haute entraînant l'ouverture des moyens 4 à pince permettant la préhension de l'ébauche soufflée par des moyens extérieurs de préhension, par exemple une roue de transfert. Les moyens 4 à pince se trouvent alors dans leur position telle que représentée sur le figure 4 permettant le transfert de l'ébauche soufflée pour ensuite réceptionner pour saisie d'une ébauche 31 non soufflée (en général une préforme).

Il est dans les compétences de l'homme du métier d'adapter la force de détente et la contraction nécessaire des moyens 17 ressort, de sorte que les galets 13, 14 restent dans leur position intermédiaire sans contraction lors du coulissement des moyens 4 à pince sur le rail 21 de guidage des moyens de butée haute vers les moyens de butée basse, et inversement.

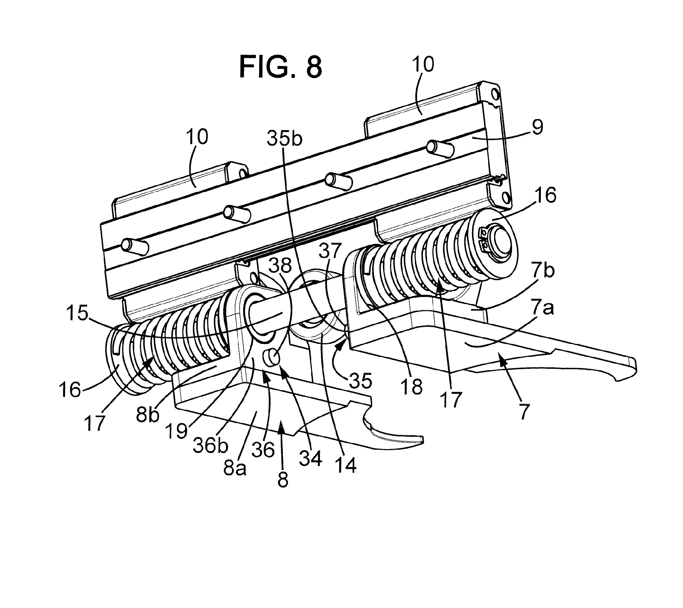

En particulier, comme illustré à la figure 8 dans une représentation analogue à celle de la figure 2, il est possible de prévoir des moyens 34 aimantés sur les faces 35, 36 respectives en vis-à-vis des branches 7, 8 des moyens 4 à pince. Pour s'affranchir des difficultés inhérentes à la nature des matériaux constitutifs des moyens 4 à pince et au bouclage des lignes de champ magnétique, il est préférable de prévoir deux aimants 37, 38 disposés en vis-à-vis sur les faces 35, 36 des branches 7, 8, de préférence sur les faces 35b, 36b en vis-à-vis appartenant respectivement aux porte-bras 7b, 8b. Les aimants 37, 38 peuvent être plaqués sur lesdites faces 35b, 36b comme montré à la figure 8 (seul l'aimant 37 étant visible), les bras 7a, 8a devant alors être conformés pour être accolés en position de fermeture des moyens 4 à pince. On peut aussi envisager un encastrement des aimants 37, 38 dans lesdites faces 35b, 36b de manière que les aimants 37, 38 affleurent les faces 35b, 36b.

Grâce à la présence des aimants 37, 38, les deux porte-bras 7b, 8b sont verrouillés magnétiquement en position de fermeture. On assure ainsi que les bras 7a, 8a enserrent correctement et fermement le col d'un récipient, quel que soit l'état, même fatigué, des moyens 17 de ressort de rappel. Lors de l'ouverture des moyens 4 à pince, la commande purement mécanique d'ouverture par les galets 13, 14 entraînés par les cames 11, 12 respectivement n'est pas affectée par l'effort résistant additionnel dû aux aimants accolés.

## Revendications

1. Dispositif (1) de soufflage ou d'étirage-soufflage pour la fabrication de récipients à partir d'ébauches en matière thermoplastique, munies d'un col, ce dispositif comportant une tuyère (3) de soufflage pour le soufflage d'un fluide sous pression à l'intérieur d'une ébauche ayant un corps disposé dans une cavité de moulage d'un moule et ayant un col émergeant hors d'une surface (30) dudit moule, avec une collerette (33) dudit col reposant sur ladite surface (30) du moule, la tuyère (3) de soufflage étant mobile entre deux positions limites, à savoir une position haute relevée au-dessus du moule et une position basse de soufflage dans laquelle la tuyère (3) de soufflage est fonctionnellement en communication étanche avec le col de manière que de l'air de soufflage sous pression soit apte à être injecté dans l'ébauche,
le dispositif étant **caractérisé en ce que** :
- des moyens (4) à pince sont disposés au-dessus du moule dans le dispositif de soufflage ou d'étirage-soufflage et sont propres à supporter une ébauche par son col sensiblement coaxialement à la cavité de moulage du moule ;
- des moyens (20, 21) de support desdits moyens (4) à pince sont propres à autoriser un mouvement desdits moyens à pince sensiblement parallèlement à l'axe (X) de soufflage de la tuyère (3) de soufflage entre une position relevée et une position abaissée dans laquelle le corps de l'ébauche est engagé dans la cavité du moule ;
- au moins une branche (7, 8) des moyens (4) à pince est mobile transversalement à l'axe de soufflage de la tuyère (3) de soufflage ; et
- des moyens (5) de couplage mécanique sont interposés entre lesdits moyens (4) à pince et la tuyère (3) de soufflage et sont propres à synchroniser les mouvements des moyens (4) à pince avec le déplacement de la tuyère (3) de soufflage.

2. Dispositif de soufflage selon la revendication 1, **caractérisé en ce qu'**au moins une branche (7, 8) des moyens (4) à pince comprend un bras (7a, 8a) de préhension ainsi qu'un porte-bras (7b, 8b) apte à coulisser sur un rail (9) de guidage transversal par l'intermédiaire d'un chariot (10) coulissant.

3. Dispositif de soufflage selon la revendication 2, **caractérisé en ce que** le bras (7a, 8a) de préhension est fixé de manière amovible sur le porte-bras (7b, 8b).

4. Dispositif de soufflage selon l'une quelconque des revendications 1 à 3, **caractérisé en ce qu'**au moins une branche (7, 8) des moyens (4) à pince présente au moins un chemin (11, 12) de came propre à coopérer avec au moins un galet (13, 14) suiveur de came fixé sur la tuyère (3) de soufflage.

5. Dispositif de soufflage selon la revendication 4, **caractérisé en ce que** le chemin (11, 12) de came de ladite branche (7, 8) est formé par un rebord interne de ladite branche (7, 8) en vis-à-vis de l'autre des deux branches (7, 8).

6. Dispositif de soufflage selon l'une quelconque des revendications 1 à 5, **caractérisé en ce que** les moyens (4) à pince présentent deux branches (7, 8) traversées l'une et l'autre par une tige (15), dont au moins une extrémité est terminée par une butée (16) fixe, du type rondelle, et **en ce que** des moyens (17) ressort sont prévus enroulés sur la tige (15) prenant appui d'une part sur la butée (16) de la tige (15), et d'autre part sur une zone (18) d'appui de la branche (7, 8), la tige (15) traversant un orifice (19) formé dans la zone (18) d'appui, ce grâce à quoi la variation de contraction des moyens (17) de ressort détermine l'écartement entre les deux branches (7, 8), permettant ainsi la saisie ou non d'une ébauche par son col.

7. Dispositif de soufflage selon l'une quelconque des revendications 2 à 6, **caractérisé en ce que** le rail (9) de guidage transversal est fixé sur des moyens (20) de support, du type barre support, prévus coulissants sur un rail (21) de guidage coaxial à l'axe de soufflage (X) de la tuyère (3) de soufflage par l'intermédiaire d'un chariot (22) coulissant.

8. Dispositif de soufflage selon l'une quelconque des revendications 1 à 7, **caractérisé en ce que** la tuyère (3) de soufflage est solidarisée à un moyen (23) de commande du déplacement de la tuyère (3) comprenant un galet (24) propre à coopérer avec une came (25) fixe.

9. Dispositif de soufflage selon l'une quelconque des revendications 7 ou 8, **caractérisé en ce qu'**il est prévu des moyens de butée contre lesquels viennent buter en position haute et en position basse les moyens (4) à pince de manière à borner le coulissement des moyens (4) à pince sur le rail (21) de guidage coaxial à l'axe de soufflage de la tuyère (3) de soufflage.

10. Dispositif de soufflage selon la revendication 9, **caractérisé en ce que** lesdits moyens (20) de support desdits moyens (4) à pince sont aptes à venir buter contre lesdits moyens de butée.

11. Dispositif de soufflage selon l'une quelconque des revendications 8 à 10, **caractérisé en ce qu'**une plaque (26) transversale est fixée sur la tuyère (3) de soufflage, préférentiellement sur l'extrémité de soufflage de la tuyère (3), plaque (26) sur laquelle est solidarisé ledit au moins un galet (13, 14) apte à suivre le chemin (11, 12) de came de la branche (7, 8) des moyens (4) à pince ainsi que le moyen (23) de commande du déplacement de la tuyère (3) de soufflage.

12. Dispositif de soufflage selon l'une quelconque des revendications 6 à 11, **caractérisé en ce que** des moyens (34) aimantés sont prévus sur les faces (35, 36) en vis-à-vis des branches (7, 8) respectivement, ce grâce à quoi les moyens (4) à pince sont verrouillés magnétiquement en position de fermeture.

13. Procédé de soufflage ou d'étirage-soufflage pour la fabrication de récipients à partir d'ébauches en matière thermoplastique, munies d'un col à l'aide d'un dispositif (1) de soufflage ou d'étirage-soufflage comportant une tuyère (3) de soufflage pour le soufflage d'un fluide sous pression à l'intérieur d'une ébauche ayant un corps disposé dans une cavité de moulage d'un moule et ayant un col émergeant hors d'une surface dudit moule, une collerette dudit col reposant sur ladite surface du moule, la tuyère (3) de soufflage étant mobile entre deux positions limites, à savoir une position haute relevée au-dessus du moule et une position basse de soufflage dans laquelle la tuyère (3) de soufflage est fonctionnellement en communication étanche avec le col de manière que de l'air de soufflage sous pression soit apte à être injecté dans l'ébauche, ledit procédé comprenant au moins les étapes suivantes :
- une étape de saisie du col d'une ébauche non soufflée par des moyens (4) à pince prévus au-dessus du moule dans le dispositif (1) de soufflage ou d'étirage-soufflage ;
- une étape d'abaissement de la tuyère depuis sa position haute (4);
- une étape de placement par lesdits moyens (4) à pince du corps de l'ébauche dans la cavité de moulage ;
- une étape de soufflage de l'ébauche à l'aide de la tuyère parvenue dans sa position basse ;
- une étape de remontée de la tuyère vers sa position haute ;
- une étape de déplacement de l'ébauche soufflée par lesdits moyens (4) à pince hors de la cavité de moulage,
- une étape de transfert de l'ébauche soufflée depuis les moyens (4) à pince vers des moyens extérieurs de préhension d'ébauches soufflées **caractérisé en ce que** lesdites étapes de saisie, de placement et de déplacement sont synchronisées avec le mouvement de la tuyère de soufflage.

14. Procédé de soufflage selon la revendication 13, **caractérisé en ce qu'**il comprend au moins une étape de commande de l'ouverture ou de la fermeture des moyens (4) à pince.

15. Procédé de soufflage selon la revendication 14, **caractérisé en ce qu'**il comprend une étape de fermeture des moyens (4) à pince en vue de la saisie de l'ébauche chauffée non soufflée et une étape d'ouverture des moyens (4) à pince après le soufflage de l'ébauche en vue de son transfert vers des moyens extérieurs de préhension d'ébauches soufflées.

16. Procédé de soufflage selon la revendication 14 ou 15, **caractérisé en ce qu'**il comprend une étape de remontée de la tuyère (3) jusqu'à sa position haute relevée au-dessus du moule de manière à permettre l'ouverture des moyens (4) à pince pour le transfert de l'ébauche soufflée et une étape de descente partielle de la tuyère (3) de soufflage depuis sa position haute relevée au-dessus du moule de manière à permettre la fermeture des moyens (4) à pince pour saisir une ébauche chauffée non soufflée, les moyens (4) à pince restant en butée contre des moyens de butée prévus dans le dispositif (1) de soufflage ou d'étirage-soufflage.

17. Procédé de soufflage selon l'une quelconque des revendications 14 à 16, **caractérisé en ce qu'**il comprend une étape d'ouverture des moyens (4) à pince une fois le corps de l'ébauche chauffée non soufflée placée dans la cavité de moulage et une étape de fermeture des moyens (4) à pince une fois l'ébauche soufflée, le corps de l'ébauche soufflée restant dans la cavité de moulage.

18. Procédé de soufflage selon l'une quelconque des revendications 13 à 17, **caractérisé en ce qu'**il comprend une étape de descente partielle de la tuyère (3) de soufflage en direction de sa position basse de soufflage avant ladite étape de placement de l'ébauche dans la cavité de moulage.

19. Procédé de soufflage selon l'une quelconque des revendications 13 à 18, **caractérisé en ce qu'**il comprend de manière supplémentaire une étape de descente totale de la tuyère (3) de soufflage jusqu'à sa position basse de soufflage avant ladite étape de soufflage de l'ébauche de manière à permettre l'ouverture des moyens (4) à pince et le placement de l'ébauche par sa collerette sur le moule et une étape de remontée partielle de la tuyère (3) de soufflage depuis la position basse de soufflage en direction de la position haute escamotée avant ladite étape de saisie de l'ébauche soufflée par les moyens (4) à pince de manière à permettre la fermeture des moyens à pince pour la préhension de l'ébauche soufflée, les moyens (4) à pince restant en butée contre des moyens de butée prévus dans le dispositif (1) de soufflage.

## Patentansprüche

1. Blas- oder Streckblasvorrichtung (1) zur Erstellung von Behältern aus mit einem Hals versehenen Rohlingen aus thermoplastischem Material, wobei die Vorrichtung eine Blasdüse (3) aufweist, um ein Fluid unter Druck in das Innere eines Rohlings zu blasen, der einen Körper aufweist, der in einem Formhohlraum einer Form angeordnet ist, und einen Hals aufweist, der aus einer Fläche (30) der Form hervorragt, wobei ein Flansch (33) des Halses auf der Fläche (30) der Form liegt, wobei die Blasdüse (3) zwischen zwei Endpositionen beweglich ist, d. h. zwischen einer über die Form angehobenen oberen Position und einer unteren Blasposition, in der die Blasdüse (3) funktional in abgedichteter Verbindung mit dem Hals steht, sodass Blasluft unter Druck in den Rohling eingeblasen werden kann,
wobei die Vorrichtung **dadurch gekennzeichnet ist, dass**:
- oberhalb der Form in der Blas- bzw. Streckblasvorrichtung Klemmittel (4) angeordnet sind, die einen Rohling an einem Hals im Wesentlichen koaxial zum Formhohlraum der Form tragen können:
- Tragmittel (20, 21) der Klemmittel (4) eine zur Blasachse (X) der Blasdüse (3) im Wesentlichen parallele Bewegung der Klemmmittel zwischen einer angehobenen Position und einer abgesenkten Position, in welcher der Körper des Rohlings in den Holraum der Form eingebracht ist, zulassen können.;
- zumindest ein Schenkel (7, 8) der Klemmittel (4) quer zur Blasachse der Blasdüse (3) beweglich ist und
- zwischen den Klemmmitteln (4) und der Blasdüse (3) mechanische Kopplungsmittel (5) angeordnet sind, welche die Bewegungen der Klemmmittel (4) mit der Verlagerung der Blasdüse (3) synchronisieren können.

2. Blasvorrichtung nach Anspruch 1, **dadurch gekennzeichnet, dass** zumindest ein Schenkel (7, 8) der Klemmittel (4) einen Greifarm (7a, 8a) und einen Armträger (7b, 8b), der über einen Gleitschlitten (10) auf einer Führungsquerschiene (9) gleiten kann, umfasst.

3. Blasvorrichtung nach Anspruch 2, **dadurch gekennzeichnet, dass** der Greifarm (7a, 8a) abnehmbar am Armträger (7b, 8b) befestigt ist.

4. Blasvorrichtung nach einem der Ansprüche 1 bis 3, **dadurch gekennzeichnet, dass** zumindest ein Schenkel (7, 8) der Klemmmittel (4) zumindest eine Nockenbahn (11, 12) aufweist, die mit zumindest einer an der Blasdüse (3) befestigten Nockenfolgerolle (13, 14) zusammenwirken kann.

5. Blasvorrichtung nach Anspruch 4, **dadurch gekennzeichnet, dass** die Nockenbahn (11, 12) des Schenkels (7, 8) durch eine Innenkante des Schenkels (7, 8) gegenüber dem anderen der beiden Schenkel (7, 8) ausgebildet ist.

6. Blasvorrichtung nach einem der Ansprüche 1 bis 5, **dadurch gekennzeichnet, dass** die Klemmmittel (4) zwei Schenkel (7, 8) aufweisen, durch die ein Schaft (15) läuft, von welchem zumindest ein Ende durch einen scheibenartigen Festanschlag (16) begrenzt ist, und dadurch, dass auf den Schaft (15) gewickelt Federmittel (17) vorgesehen sind, die sich einerseits am Anschlag (16) des Schafts (15) und andererseits an einem Stützbereich (18) des Schenkels (7, 8) abstützen, wobei der Schaft (15) durch eine im Stützbereich (18) ausgebildete Öffnung (19) läuft, wodurch die Änderung der Kontraktion der Federmittel (17) den Abstand zwischen den beiden Schenkeln (7, 8) bestimmt, wodurch das Erfassen bzw. Nichterfassen eines Rohlings an seinem Hals ermöglicht wird.

7. Blasvorrichtung nach einem der Ansprüche 2 bis 6, **dadurch gekennzeichnet, dass** die Führungsquerschiene (9) an tragschienenartigen Tragmitteln (20) befestigt ist, die über einen Gleitschlitten (22) gleitend auf einer zur Blasachse (X) der Blasdüse (3) koaxialen Führungsschiene (21) vorgesehen sind.

8. Blasvorrichtung nach einem der Ansprüche 1 bis 7, **dadurch gekennzeichnet, dass** die Blasdüse (3) mit einem Mittel (23) zur Steuerung der Verlagerung der Düse (3) fest verbunden ist, das eine Rolle (24) umfasst, welche mit einem festen Nocken (25) zusammenwirken kann.

9. Blasvorrichtung nach einem der Ansprüche 7 oder 8, **dadurch gekennzeichnet, dass** sie mit Anschlagmitteln versehen ist, gegen welche die Klemmmittel (4) in der oberen Position und in der unteren Position stoßen, sodass das Gleiten der Klemmittel (4) auf der zur Blasachse der Blasdüse (3) koaxialen Führungsschiene (21) begrenzt ist.

10. Blasvorrichtung nach Anspruch 9, **dadurch gekennzeichnet, dass** die Tragmittel (20) der Klemmmittel (4) gegen die Anschlagmittel stoßen können.

11. Blasvorrichtung nach einem der Ansprüche 8 bis 10, **dadurch gekennzeichnet, dass** an der Blasdüse (3), vorzugsweise am Blasende der Düse (3), eine Querplatte (26) befestigt ist, wobei an der Platte (26) die zumindest eine Rolle (13, 14), die der Nockenbahn (11, 12) des Schenkels (7, 8) der Klemmmittel (4) folgen kann, sowie das Mittel (23) zur Steuerung der Verlagerung der Blasdüse (3) fest befestigt ist.

12. Blasvorrichtung nach einem der Ansprüche 6 bis 11, **dadurch gekennzeichnet, dass** an den gegenüberliegenden Seiten (35, 36) der Schenkel (7, 8) jeweils Magnetmittel (34) vorgesehen sind, wodurch die Klemmmittel (4) magnetisch in geschlossener Position gesichert sind.

13. Blas- oder Streckblasverfahren zur Herstellung von Behältern aus mit einem Hals versehenen Rohlingen aus thermoplastischem Material mit Hilfe einer Blas-bzw. Streckblasvorrichtung (1), die eine Blasdüse (3) aufweist, um ein Fluid unter Druck in das Innere eines Rohlings zu blasen, der einen Körper aufweist, der in einem Formhohlraum einer Form angeordnet ist, und einen Hals aufweist, der aus einer Fläche der Form hervorragt, wobei ein Flansch des Halses auf der Fläche der Form liegt, wobei die Blasdüse (3) zwischen zwei Endpositionen beweglich ist, d. h. zwischen einer über die Form angehobenen oberen Position und einer unteren Blasposition, in der die Blasdüse (3) funktional in abgedichteter Verbindung mit dem Hals steht, sodass Blasluft unter Druck in den Rohling eingeblasen werden kann,
wobei das Verfahren zumindest folgende Schritte umfasst:
- einen Schritt des Erfassens des Halses eines ungeblasenen Rohlings durch Klemmmittel (4), die über der Form in der Blas- bzw. Streckblasvorrichtung (1) vorgesehen sind;
- einen Schritt des Absenkens der Düse aus ihrer oberen Position (4);
- einen Schritt des Anordnens des Rohlingkörpers durch die Klemmittel (4) im Formhohlraum;
- einen Schritt des Blasens des Rohlings mit Hilfe der in ihre untere Position gelangten Düse;
- einen Schritt des Wiederanhebens der Düse in Richtung ihrer oberen Position;
- einen Schritt des Verlagerns des geblasenen Rohlings durch die Klemmmittel (4) aus dem Formhohlraum hinaus,
- einen Schritt des Beförderns des geblasenen Rohlings von den Klemmmitteln (4) zu externen Mitteln zum Greifen geblasener Rohlinge,
**dadurch gekennzeichnet, dass** die Schritte des Erfassens, des Anordnens und des Verlagerns mit der Bewegung der Blasdüse synchronisiert sind.

14. Blasverfahren nach Anspruch 13, **dadurch gekennzeichnet, dass** es zumindest einen Schritt des Steuerns des Öffnens bzw. des Schließens der Klemmmittel (4) umfasst.

15. Blasverfahren nach Anspruch 14, **dadurch gekennzeichnet, dass** es einen Schritt des Schließens der Klemmittel (4) zum Erfassen des erhitzten, ungeblasenen Rohlings und einen Schritt des Öffnens der Klemmittel (4) nach dem Blasen des Rohlings zu dessen Beförderung zu externen Mitteln zum Greifen geblasener Rohlinge umfasst.

16. Blasverfahren nach Anspruch 14 oder 15, **dadurch gekennzeichnet, dass** es umfasst: einen Schritt des Wiederanhebens der Düse (3) bis zur ihrer über die Form angehobenen oberen Position umfasst, um das Öffnen der Klemmittel (4) zum Befördern des geblasenen Rohlings zu ermöglichen, und einen Schritt des partiellen Absenkens der Blasdüse (3) aus ihrer über die Form angehobenen oberen Position, um das Schließen der Klemmmittel (4) zum Erfassen eines erhitzten, ungeblasenen Rohlings zu ermöglichen, wobei die Klemmmittel (4) am Anschlag der in der Blas- bzw. Streckblasvorrichtung (1) vorgesehenen Anschlagmitteln verbleiben.

17. Blasverfahren nach einem der Ansprüche 14 bis 16, **dadurch gekennzeichnet, dass** es umfasst: einen Schritt des Öffnens der Klemmmittel (4), sobald der Körper des erhitzten, ungeblasenen Rohlings im Formhohlraum angeordnet ist, und einen Schritt des Schließens der Klemmmittel (4), sobald der Rohling geblasen ist, wobei der Körper des Rohlings im Formhohlraum verbleibt.

18. Blasverfahren nach einem der Ansprüche 13 bis 17, **dadurch gekennzeichnet, dass** es vor dem Schritt des Anordnens des Rohlings im Formhohlraum einen Schritt des partiellen Absenkens der Blasdüse (3) in Richtung ihrer unteren Blasposition umfasst.

19. Blasverfahren nach einem der Ansprüche 13 bis 18, **dadurch gekennzeichnet, dass** es vor dem Schritt des Blasens des Rohlings zusätzlich einen Schritt des vollständigen Absenkens der Blasdüse (3) bis zur ihrer unteren Blasposition umfasst, um das Öffnen der Klemmittel (4) und das Anordnen des Rohlings an seinem Flansch in der Form zu ermöglichen, und vor dem Schritt des Erfassens des geblasenen Rohlings durch die Klemmittel (4) einen Schritt des partiellen Wiederanhebens der Blasdüse (3) aus der unteren Blasposition in Richtung der oberen eingefahrenen Position umfasst, um das Schließen der Klemmittel zum Greifen des geblasenen Rohlings zu ermöglichen, wobei die Klemmittel (4) am Anschlag der in der Blasvorrichtung (1) vorgesehenen Anschlagmittel verbleiben.

## Claims

1. Blow moulding or stretch-blow moulding device (1) for producing containers from blanks made of thermoplastic material, provided with a neck, this device comprising a blowing nozzle (3) for blowing a fluid under pressure inside a blank having a body arranged in a moulding cavity of a mould and having a neck protruding from a surface (30) of said mould, with a flange (33) of said neck resting on said surface (30) of the mould, the blowing nozzle (3) being mobile between two limit positions, namely a high position raised above the mould and a low blow moulding position in which the blowing nozzle (3) is functionally in tight connection with the neck so that blow air under pressure is capable of being injected into the blank,
the device being **characterized in that**:
- clamping means (4) are arranged above the mould in the blow moulding or stretch-blow moulding device and are suitable for supporting a blank by its neck substantially coaxially with the moulding cavity of the mould;
- means (20, 21) of support of said clamping means (4) are suitable for allowing a movement of said clamping means substantially parallel to the blowing axis (X) of the blowing nozzle (3) between a raised position and a lowered position in which the body of the blank is engaged in the cavity of the mould;
- at least one limb (7, 8) of the clamping means (4) is mobile transversely to the blowing axis of the blowing nozzle (3)
and
- mechanical coupling means (5) are interposed between said clamping means (4) and the blowing nozzle (3) and are suitable for synchronizing the movements of the clamping means (4) with the displacement of the blowing nozzle (3).

2. Blow moulding device according to claim 1, **characterized in that** at least one limb (7, 8) of the clamping means (4) comprises a gripping arm (7a, 8a) as well as an arm holder (7b, 8b) capable of sliding on a transversal guide rail (9) by means of a sliding carriage (10).

3. Blow moulding device according to claim 2, **characterized in that** the gripping arm (7a, 8a) is detachably fixed to the arm holder (7b, 8b).

4. Blow moulding device according to any one of claims 1 to 3, **characterized in that** at least one limb (7, 8) of the clamping means (4) has at least one cam channel (11, 12) suitable for cooperating with at least one cam roller (13, 14) fixed to the blowing nozzle (3).

5. Blow moulding device according to claim 4, **characterized in that** the cam channel (11, 12) of said limb (7, 8) is formed by an internal edge of said limb (7, 8) opposite the other one of the two limbs (7, 8).

6. Blow moulding device according to any one of claims 1 to 5, **characterized in that** the clamping means (4) has two limbs (7, 8) through both of which a rod (15) passes, having at least one end terminated by a fixed stop (16), of the washer type, and **in that** coiled spring means (17) are provided on the rod (15) supported on the one hand on the stop (16) of the rod (15), and on the other hand on a support zone (18) of the limb (7, 8), the rod (15) passing through a hole (19) formed in the support zone (18), by means of which the variation in the contraction of the spring means (17) determines the gap between the two limbs (7, 8), thus allowing or not allowing the gripping of a blank by its neck.

7. Blow moulding device according to any one of claims 2 to 6, **characterized in that** the transversal guide rail (9) is fixed to support means (20), of the supporting-bar type, provided sliding on a guide rail (21) coaxial with the blowing axis (X) of the blowing nozzle (3) by means of a sliding carriage (22).

8. Blow moulding device according to any one of claims 1 to 7, **characterized in that** the blowing nozzle (3) is attached to a means (23) of control of the displacement of the nozzle (3) comprising a roller (24) suitable for cooperating with a fixed cam (25).

9. Blow moulding device according to any one of claims 7 or 8, **characterized in that** stop means are provided against which, in the high position and in the low position, the clamping means (4) abut in order to limit the sliding of the clamping means (4) on the guide rail (21) coaxial with the blowing axis of the blowing nozzle (3).

10. Blow moulding device according to claim 9, **characterized in that** said support means (20) of said clamping means (4) are capable of abutting against said stop means.

11. Blow moulding device according to any one of claims 8 to 10, **characterized in that** a transversal plate (26) is fixed to the blowing nozzle (3), preferably on the blowing end of the nozzle (3), a plate (26) to which said at least one roller (13, 14) is firmly attached capable of following the cam channel (11, 12) of the limb (7, 8) of the clamping means (4) as well as means (23) for control of the displacement of the blowing nozzle (3).

12. Blow moulding device according to any one of claims 6 to 11, **characterized in that** magnetic means (34) are provided on the opposite surfaces (35, 36) of the limbs (7, 8) respectively, by means of which the clamping means (4) are magnetically locked in the closed position.

13. Blow moulding or stretch-blow moulding method for producing containers from blanks made of thermoplastic material, provided with a neck, using a blow moulding or stretch-blow moulding device (1) comprising a blowing nozzle (3) for blowing a fluid under pressure inside a blank having a body arranged in a moulding cavity of a mould and having a neck protruding from a surface of said mould, a flange of said neck resting on said surface of the mould, the blowing nozzle (3) being mobile between two limit positions, namely a high position raised above the mould and a low blow moulding position in which the blowing nozzle (3) is functionally in tight connection with the neck so that blow air under pressure is capable of being injected into the blank,
said method comprising at least the following steps:
- a step of gripping the neck of a non-blow moulded blank by clamping means (4) provided above the mould in the blow moulding or stretch-blow moulding device (1);
- a step of lowering the nozzle from its high position (4);
- a step of placing the body of the blank in the moulding cavity by said clamping means (4);
- a step of blow moulding the blank using the nozzle once it has reached its low position;
- a step of lifting the nozzle back to its high position;
- a step of displacing the blow moulded blank out of the moulding cavity by said clamping means, (4);
- a step of transferring of the blow moulded blank from the clamping means (4) to external means for gripping blow moulded blanks, **characterized in that** said gripping, placing and displacement steps are synchronized with the movement of the blowing nozzle.

14. Blow moulding method according to claim 13, **characterized in that** it comprises at least one step of controlling the opening or closing of the clamping means (4).

15. Blow moulding method according to claim 14, **characterized in that** it comprises a step of closing the clamping means (4) in order to grip the non-blow moulded heated blank and a step of opening the clamping means (4) after the blow moulding of the blank in order to transfer it to external means for gripping blow moulded blanks.

16. Blow moulding method according to claim 14 or 15, **characterized in that** it comprises a step of lifting the nozzle (3) back up to its high position raised above the mould in order to allow the opening of the clamping means (4) for the transfer of the blow moulded blank and a step of partial descent of the blowing nozzle (3) from its high position raised above the mould in order to allow the closing of the clamping means (4) to grip a non-blow moulded heated blank, the clamping means (4) remaining in abutment against stop means provided in the blow moulding or stretch-blow moulding device (1).

17. Blow moulding method according to any one of claims 14 to 16, **characterized in that** it comprises a step of opening the clamping means (4) once the body of the non-blow moulded heated blank is placed in the moulding cavity and a step of closing the clamping means (4) once the blank is blow moulded, the body of the blow moulded blank remaining in the moulding cavity.

18. Blow moulding method according to any one of claims 13 to 17, **characterized in that** it comprises a step of partial descent of the blowing nozzle (3) in the direction of its low blow moulding position before said step of placing the blank in the moulding cavity.

19. Blow moulding method according to any one of claims 13 to 18, **characterized in that** it additionally comprises a step of total descent of the blowing nozzle (3) to its low blow moulding position before said step of blow moulding of the blank in order to allow the opening of the clamping means (4) and the placing of the blank by its flange on the mould and a step of partial lifting of the blowing nozzle (3) from the low blow moulding position in the direction of the retracted high position before said step of gripping of the blow moulded blank by the clamping means (4) in order to allow the closing of the clamping means for the gripping of the blow moulded blank, the clamping means (4) remaining in abutment against stop means provided in the blow moulding device (1).
